# EUROPÄISCHE PATENTSCHRIFT

(11) **EP 1 728 001 B1**
(45) Veröffentlichungstag und Bekanntmachung des Hinweises auf die Patenterteilung: **08.12.2010**
(21) Anmeldenummer: 05729679.0
(22) Anmeldetag: 03.03.2005
(51) Int. Cl.: F16D 59/02, B60T 13/04

(54) **FEDERBETÄTIGTE FESTSTELL-BREMSVORRICHTUNG**
SPRING-ACTUATED PARKING BRAKE DEVICE
SYSTEME DE FREIN DE STATIONNEMENT ACTIONNE PAR RESSORT

(30) Priorität: 17.03.2004 DE 102004012952
(43) Veröffentlichungstag der Anmeldung: 06.12.2006
(73) Patentinhaber: ROBERT BOSCH GMBH, 70442 Stuttgart (DE)
(72) Erfinder: KASPER, Christoph, 87527 Sonthofen (DE); GUGGENMOS, Harald, 87509 Immenstadt/Seifen (DE)
(86) Internationale Anmeldenummer: PCT/EP2005/050938
(87) Internationale Veröffentlichungsnummer: WO 2005/090816

(56) Entgegenhaltungen:
- GB-A- 805 801
- GB-A- 2 139 173
- US-A- 4 771 869
- US-A- 5 701 977

## Beschreibung

### Stand der Technik

Die vorliegend Erfindung betrifft eine Feststell-Bremsvorrichtung mit einer Betätigungseinheit und einer Übertragungseinheit zur Übertragung einer Betätigungskraft der Betätigungseinheit auf eine Bremseinrichtung.

Eine derartige Feststell-Bremsvorrichtung ist beispielsweise aus der US 5,701,977 A bereits bekannt. Diese bildet eine Notbremsvorrichtung, um ein motorgetriebenes Fahrzeug zum Stillstand zu bringen, sobald die Gefahr besteht, dass sich das Fahrzeug verselbstständigt und zur Gefahr für die Umwelt wird. Dies trifft beispielsweise für Motorschlitten oder dergleichen zu, wenn der Fahrer abgeworfen wird. Bei der bekannten Vorrichtung ist ein mechanisch betätigbarer Sicherungsstift, an welcher sich eine vorgespannte Feder abstützt, fest mit dem Fahrer verbunden. Mit der Entfernung des Fahrers vom Fahrzeug wird der Stift gezogen und damit die Feder freigegeben. Die sich dabei entspannende Feder betätigt über einen Umlenkhebel eine Bremse, welche das Fahrzeug abbremst.

Weiterhin bekannt sind manuelle Feststell-Bremsvorrichtungen umfassend einen Seilzug als Betätigungseinheit, wobei eine Betätigungskraft des Seilzuges über eine Übertragungseinrichtung, wie z.B. einen Spindeltrieb, auf die Feststellbremse wirkt. Ferner sind automatische Parkbremsen bekannt, welche anstelle des Seilzuges eine automatisierte Betätigungseinheit aufweisen, welche insbesondere mittels Hydraulik arbeiten. Weiterhin sind Feststell-Bremsvorrichtungen bekannt, bei denen eine Feststellung bzw. ein Lösen der Bremse mittels elektrischer Antriebe erfolgt. Die bekannten Feststell-Bremsvorrichtungen sind jedoch relativ aufwendig und teuer in der Herstellung und benötigen eine Vielzahl von Antriebs- und Steuerungsbauteilen.

### Vorteile der Erfindung

Die erfindungsgemäße Feststell-Bremsvorrichtung mit den Merkmalen des Patentanspruchs 1 weist demgegenüber den Vorteil auf, dass sie einen einfachen Aufbau aufweist und besonders kostengünstig bereitgestellt werden kann. Da es sich bei Feststell-Bremsvorrichtungen um Massenbauteile handelt, können hohe Einsparpotentiale realisiert werden. Die erfindungsgemäße Feststell-Bremsvorrichtung verwendet zum Feststellen der Feststellbremse als Betätigungskraft eine Federkraft. Die Federkraft kann mittels eines einfach aufgebauten Federelements, wie z.B. einer Tellerfeder oder einer Spiralfeder, bereitgestellt werden. Somit können aufwendige Zusatzbauteile für die Betätigungseinrichtung der Feststellbremse entfallen.
Bei der Erfindung ist ein Verriegelungselement vorgesehen, um das Federelement zu verriegeln bzw. freizugeben. Dadurch kann eine einfach aufgebaute betriebssichere Feststellbremse ermöglicht werden. Erfindungsgemäß ist das Verriegelungselement mittels eines elektromagnetischen oder elektrischen Aktuators zwischen einer ersten Position, in welcher der Federkolben verriegelt ist, und einer zweiten Position, in welcher der Federkolben freigegeben ist, verstellbar.

Die Unteransprüche zeigen bevorzugte Weiterbildungen der Erfindung.

Um eine sichere Übertragung der Betätigungskraft zu ermöglichen, ist vorzugsweise zwischen dem Federelement und der Übertragungseinheit ein Federkolben angeordnet. Dabei wirkt die Federkraft des Federelements über den Federkolben auf die Übertragungseinheit.

Um einen besonders kostengünstigen und einfachen Aufbau zu erreichen, umfasst das Verriegelungselement vorzugsweise einen Verriegelungskolben und ein Eingriffselement. Der Verriegelungskolben bringt dabei das Eingriffselement mit dem Federkolben in Eingriff.

Besonders bevorzugt sind dabei der Verriegelungskolben und der Federkolben in Serie angeordnet, so dass eine sehr kompakte Ausbildung erhalten werden kann. Somit ist eine Betätigungsrichtung des Federkolbens gleich der Betätigungsrichtung des Verriegelungskolbens.

Um ein schnelles und sicheres Ineingriffbringen des Eingriffselements mit dem Federkolben bereitzustellen, weist der Verriegelungskolben vorzugsweise einen sich verjüngenden Bereich auf. Wenn der Verriegelungskolben dabei betätigt wird, wird das Eingriffselement über den sich verjüngenden Bereich in Eingriff mit dem Federkolben gebracht und der Federkolben in der verriegelten Stellung gehalten. Vorzugsweise ist am Verriegelungskolben eine Ringnut ausgebildet und der sich verjüngende Bereich ist an einer Wand der Ringnut angeordnet.

Gemäß einer weiteren bevorzugten Ausgestaltung der Erfindung ist im Inneren des Federkolbens ein Hohlzylinder ausgebildet. Der Hohlzylinder weist eine im Wesentlichen ringförmige Ausnehmung zur Aufnahme des Eingriffselements auf. Vorzugsweise weist die im Wesentlichen ringförmige Ausnehmung einen sich verjüngenden Bereich auf, um das Eingriffselement vom Federkolben außer Eingriff zu bringen. Hierbei wird der Federkolben mittels Federkraft bewegt und der sich verjüngende Bereich betätigt das Eingriffselement, so dass dieses vom Federkolben außer Eingriff kommt. Es sei angemerkt, dass die im Wesentlichen ringförmige Ausnehmung unmittelbar in einem hohlen Federkolben vorgesehen werden kann oder auch in einem einstückig mit dem Federkolben gebildeten zusätzlichen Hohlzylinder.

Vorzugsweise ist das Eingriffselement eine Vielzahl von Kugeln oder Walzen. Bei einer Verwendung von Kugeln als Eingriffselemente kann dabei eine besonders einfach und kostengünstig aufgebaute Feststell-Bremsvorrichtung bereitgestellt werden.

Gemäß einer bevorzugten Ausgestaltung der Erfindung erfolgt eine Rückstellung des Federkolbens in seine Ausgangsposition mittels pneumatischer oder hydraulischer Kraft. Besonders bevorzugt wird dabei eine hydraulische Kraft verwendet, welche durch ein in einem Fahrzeug schon vorgesehenes System mit aktivem Druckaufbau, z.B. ESP o.ä., bereitgestellt wird. Dadurch kann der Aufwand für die erfindungsgemäße Feststellbremsvorrichtung weiter reduziert werden, da schon auf bereits vorhandene Bauteile bzw. Systeme im Fahrzeug zurückgegriffen werden kann.

Um eine besonders kostengünstige Ausgestaltung des Verriegelungselements zu erreichen, wird der Verriegelungskolben vorzugsweise mittels einer Rückstellfeder in seine Ausgangsposition zurückgebracht.

Die erfindungsgemäße Feststell-Bremsvorrichtung wird vorzugsweise in Fahrzeugen und insbesondere auch in Kombination mit einer Betriebsbremse eines Fahrzeugs verwendet.

### Zeichnung

Nachfolgend wird unter Bezugnahme auf die Zeichnung ein Ausführungsbeispiel der Erfindung im Detail beschrieben. In der Zeichnung ist:
- Figur 1: eine schematische Schnittansicht einer Feststell-Bremsvorrichtung 1 gemäß einem Ausführungsbeispiel der Erfindung, wobei die Feststell-Bremsvorrichtung im Nicht- Eingriffszustand dargestellt ist, und
- Figur 2: eine vergrößerte Teildarstellung der in Figur 1 gezeigten Feststell-Bremsvorrichtung im Eingriffszustand der Feststell-Bremsvorrichtung.

### Beschreibung des Ausführungsbeispiels

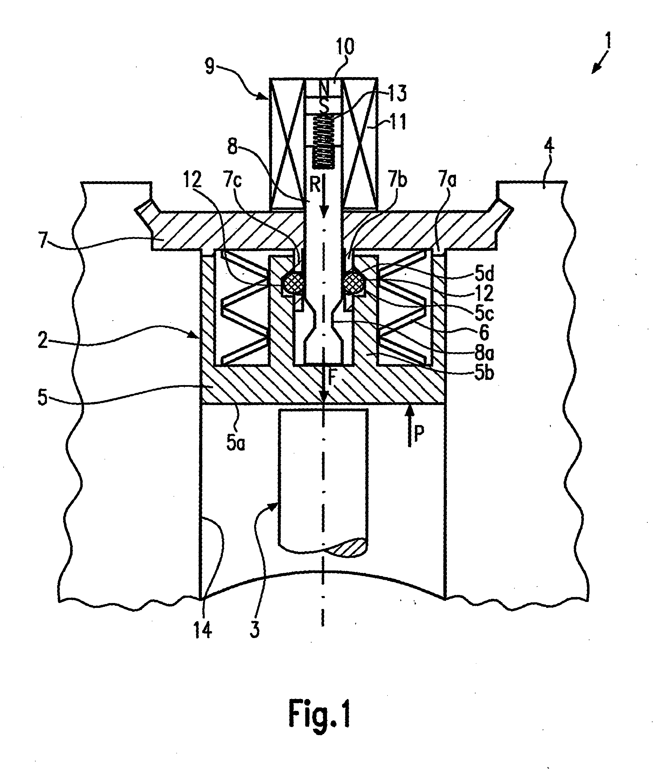

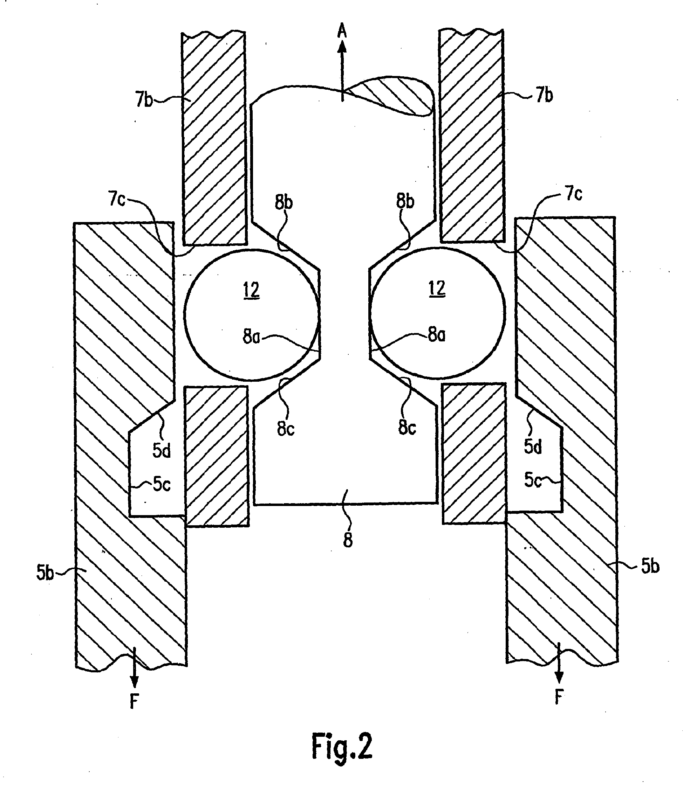

Nachfolgend wird unter Bezugnahme auf die Figuren 1 und 2 eine Feststell-Bremsvorrichtung 1 gemäß einem Ausführungsbeispiel der Erfindung beschrieben.

Wie in Figur 1 gezeigt, umfasst die Feststell-Bremsvorrichtung 1 eine Betätigungseinheit 2 und eine Übertragungseinheit 3. Die Übertragungseinheit 3 steht mit einer nicht gezeigten Feststellbremse in Verbindung und überträgt eine Betätigungskraft F von der Betätigungseinheit 2 auf die Feststellbremse, um eine Feststellbremsfunktion auszuführen. Die Übertragungseinheit 3 kann beispielsweise ein Spindeltrieb o.ä. sein und einen Nachstellmechanismus umfassen.

Die Betätigungseinheit 2 umfasst ein Federelement 6, einen Federkolben 5 sowie eine Abdeckung 7, an welcher sich das Federelement 6 abstützt. Wie in Figur 1 gezeigt, ist das Federelement 6 als Blattfederelement ausgebildet und stützt sich einerseits an der Abdeckung 7 und andererseits am Federkolben 5 an dessen Innenseite ab. Das Federelement 6 übt eine ständige Federkraft in Richtung des Pfeils F auf den Federkolben 5 aus. Der Federkolben 5 ist beweglich in einer Zylinderbohrung 14 angeordnet, welche in einem Bremssattel 4 ausgebildet ist.

Ferner umfasst die Betätigungseinheit 2 der Feststell-Bremsvorrichtung 1 ein Verriegelungselement, um den Federkolben 5 zu verriegeln. Das Verriegelungselement umfasst einen Verriegelungskolben 8, welcher mittels eines elektrischen Aktuators 9 und einer Rückstellfeder 13 in Richtung seiner Längsachse bewegbar ist, sowie ein Eingriffselement in Form von Kugeln 12. In diesem Ausführungsbeispiel sind zwei Kugeln 12 als Eingriffselement vorgesehen. Es sei jedoch angemerkt, dass auch eine andere Anzahl an Kugeln, z.B. drei oder vier, vorgesehen sein kann.

Der elektrische Aktuator 9 umfasst einen Permanentmagneten 10 sowie eine Spule 11 und die Rückstellfeder 13. Durch Bestromung des elektrischen Aktuators 9 kann der Verriegelungskolben 8 entgegen der Federkraft der Rückstellfeder 13 nach oben bewegt werden und nach Beendigung der Bestromung mittels der Rückstellfeder 13 wieder in seine Ausgangsposition zurückgestellt werden. In der oberen Position kann der Verriegelungskolben 8 mittels des Permanentmagneten 10 gehalten werden.

Wie aus Figur 1 ersichtlich ist, ist der Federkolben 5 im Wesentlichen als topfförmiger Federkolben mit einer Kolbenfläche 5a zur Betätigung der Übertragungseinheit 3 ausgebildet. Im Inneren des Federkolbens 5 ist ein Hohlzylinder 5b gebildet, in welchem eine im Wesentlichen ringförmige Ausnehmung 5c mit einem sich verjüngenden Bereich 5d gebildet ist. Dies ist im Detail aus Figur 2 ersichtlich. Die Abdeckung 7, welche die Zylinderbohrung 14 im Bremssattel 4 verschließt, weist einen Anschlag 7a, einen Führungsbereich 7b und zwei Durchgangsbohrungen 7c auf. Der Führungsbereich 7b dient zur Führung des Verriegelungskolbens 8 und steht nach innen in Richtung des Federkolbens 5 vor. Die beiden Durchgangsbohrungen 7c sind am Führungsbereich 7d gebildet und weisen einen Durchmesser auf, welcher etwas größer als ein Durchmesser der Kugeln 12 ist. Die Durchgangsbohrungen 7c sind dabei einander gegenüberliegend angeordnet.

Ferner ist im Verriegelungskolben 8 eine ringförmige Ausnehmung 8a mit einem oberen sich verjüngenden Bereich 8b und einem unteren sich verjüngenden Bereich 8c gebildet.

Nachfolgend wird die Funktionsweise der erfindungsgemäßen Feststell-Bremsvorrichtung 1 beschrieben. Figur 1 zeigt dabei den Zustand, in welchem sich die Feststell-Bremsvorrichtung außer Eingriff befindet. Hierzu ist der Federkolben 5 über das Verriegelungselement im verriegelten Zustand. Genauer befinden sich die beiden Kugeln 12 in der ringförmigen Ausnehmung 5c im Hohlzylinder 5b im Eingriff. Die Kugeln sind dabei, wie in Figur 1 gezeigt, nicht vollständig in der Ausnehmung 5c aufgenommen, sondern ein Teil der Kugeln befindet sich weiterhin in der Durchgangsbohrung 7c, welche im Führungsbereich 7b der Abdeckung 7 gebildet sind. Vorzugsweise befindet sich dabei ungefähr eine Hälfte der Kugeln 12 in der Durchgangsbohrung 7c und ungefähr die andere Hälfte in der ringförmigen Ausnehmung 5c. Obwohl das Federelement 6 eine Federkraft F auf den Federkolben 5 ausübt, kann sich der Federkolben 5 nicht bewegen, da die Kugeln 12 den Federkolben am Führungsbereich 7b halten.

Es sei angemerkt, dass im Nichteingriffszustand der Feststellbremse der elektrische Aktuator 9 nicht bestromt ist, so dass die Rückstellfeder 13 den Verriegelungskolben 8 nach unten auf den Federkolben 5 drückt (vgl. Figur 1). Dadurch ist sichergestellt, dass die Ausnehmung 8a im Verriegelungskolben 8 sich nicht auf gleicher Höhe mit den Kugeln 12 befindet, sondern dass ein darüber liegender zylindrischer Bereich des Verriegelungskolbens 8 sich auf einer Höhe mit den Kugeln 12 befindet, so dass die Kugeln in der in Figur 1 gezeigten Stellung fixiert sind.

In der verriegelten Stellung des Federkolbens 5 befindet sich dieser mit einem kleinen Abstand von dem an der Abdeckung 7 gebildeten Anschlag 7a.

Soll die Feststellbremse aktiviert werden, so wird in einem ersten Schritt über ein im Fahrzeug vorhandenes Bremssystem mit aktivem Druckaufbau ein Druck P aufgebaut und die Kugeln 12 entlastet. Dabei wirkt der Druck P gegen die Federkraft F des Federelementes 6 und drückt den Federkolben 5 gegen den Anschlag 7a. Anschließend wird der Druck P über das vorhandene Bremssystem mit aktivem Druckaufbau geräuschlos abgebaut. In einem nächsten Schritt wird die Spule 11 des elektrischen Aktuators bestromt, so dass der Verriegelungskolben 8 nach oben in Richtung des Pfeils A (vgl. Figur 2) entgegen der Kraft der Rückstellfeder 13 bewegt wird. Der Verriegelungskolben 8 wird dabei so lange in Richtung A bewegt, bis er den Permanentmagneten 10 berührt. Der Verriegelungskolben 8 wird in seiner oberen Position durch die Magnetkräfte des Permanentmagneten 10 gehalten, sodass die Bestromung der Spule 11 beendet werden kann. In dieser Position befinden sich die Ausnehmung 8a des Verriegelungskolbens 8 auf gleicher Höhe mit den beiden Durchgangsbohrungen 7c im Führungsbereich 7b der Abdeckung 7. Diese Position ist in Figur 2 dargestellt.

Da das Federelement 6 seine Federkraft F ständig auf den Federkolben 5 ausübt, werden die beiden Kugeln über die sich verjüngenden Bereiche 5d in der Ausnehmung 5c des Hohlzylinders 5b des Federkolbens 5 jeweils nach innen bewegt. Dadurch werden die beiden Kugeln 12 in die ringförmige Ausnehmung 8a des Verriegelungskolbens 8 geschoben und der Federkolben 5 kann sich in Richtung der Federkraft F nach unten bewegen. Dies ist in Figur 2 gezeigt. In dieser Position befindet sich ungefähr eine Hälfte der Kugeln 12 in der ringförmigen Ausnehmung 8a und ungefähr die andere Hälfte der Kugeln 12 befindet sich in der Durchgangsbohrung 7c.

Somit kann der Federkolben 5, wie in Figur 2 gezeigt, in Richtung der Federkraft F nach unten bewegt werden und seine Kolbenfläche 5a kommt mit dem Kolben der Übertragungseinheit 3 in Kontakt und überträgt die Federkraft auf die Übertragungseinheit, welche ihrerseits die nicht gezeigten Bremsbacken der Feststell-Bremsvorrichtung betätigt. Somit befindet sich die Feststell-Bremsvorrichtung im Eingriff.

Um die Feststell-Bremsvorrichtung 1 wieder zu lösen, wird über das ESP-System wieder der Druck P aufgebaut, so dass der Federkolben 5 entgegen der Federkraft F des Federelementes 6 wieder nach oben in die in Figur 1 gezeigte Position bewegt wird. Wenn der Federkolben 5 mit dem Anschlag 7a an der Abdeckung 7 in Kontakt kommt, befindet sich die Ausnehmung 5c wieder auf gleicher Höhe wie die beiden Durchgangsbohrungen 7c am Führungsbereich 7d der Abdeckung 7. Durch Umpolen des elektrischen Aktuators 9 wird der Permanentmagnet 10 geschwächt, so dass eine Rückstellung des Verriegelungskolbens 8 mittels der Rückstellkraft R der Rückstellfeder 13 erfolgen kann. Dadurch kann mittels der Kraft der Rückstellfeder 13 der Verriegelungskolben 8 wieder nach unten bewegt werden und die Kugeln 12 werden durch die beiden Durchgangsbohrungen 7c wieder in die Ausnehmung 5c des Federkolbens 5 bewegt. Anschließend wird der Druck P mittels des Bremssystems mit aktivem Druckaufbau wieder abgebaut, so dass der Federkolben 5 gemäß der vorhandenen Toleranzen etwas nach unten bewegt wird, so dass eine Kraft auf die Kugeln 12 ausgeübt wird und der Federkolben 5 über die Ausnehmung 7c und die Kugeln 12 gehalten wird.

Es sei angemerkt, dass aus herstellungsbedingten Gründen und einer kostengünstigen Fertigung die Ausnehmungen 8a am Verriegelungskolben 8 und die Ausnehmungen 5c am Federkolben 5 ringförmig ausgebildet sind. Es ist jedoch auch möglich, dass jeweils separate Ausnehmungen am Verriegelungskolben 8 bzw. am Hohlzylinder 5b des Verriegelungskolbens 5 entsprechend der Anzahl der verwendeten Kugeln gebildet werden. Weiterhin sei angemerkt, dass anstelle von zwei Kugeln auch drei oder vier Kugeln verwendet werden können. Bei Verwendung von mehreren Kugeln ergibt sich eine verbesserte Kraftverteilung am Verriegelungselement.

Erfindungsgemäß erfolgt somit die Verriegelung bzw. Entriegelung des Federkolbens 5 durch Bewegung der Kugeln 12 in einer Richtung senkrecht zur Bewegungsrichtung des Federkolbens 5. Ein zurückgelegter Weg der Kugeln 12 beträgt dabei jeweils ungefähr die Hälfte des Durchmessers der Kugeln. Dabei benötigt das erfindungsgemäße Verriegelungselement einen besonders kleinen Bauraum und kann sehr kostengünstig bereitgestellt werden. Das Federelement 6 kann, wie in Figur 1 gezeigt, als mehrere übereinander angeordnete Blattfedern ausgebildet sein, oder es kann auch eine zylindrische Spiralfeder verwendet werden, welche in den Bereich zwischen der Außenwand des Federkolbens 5 und dem inneren Hohlzylinder 5b angeordnet ist. Sollte einmal bei einem Stromausfall der elektrische Aktuator 9 nicht betätigbar sein, kann ein Fahrer durch einen Tritt auf das Bremspedal per Muskelkraft den Druck P aufbauen und den Federkolben 5 in seine Ausgangsposition bringen. Auch kann durch eine externe Energiequelle der Verriegelungskolben 8 in Ausgangsposition gebracht werden, indem durch Bestromung der Spule 11 der Permanentmagnet 10 geschwächt wird. Somit ist die Feststellbremse gelöst und eine Entriegelung im Notfall möglich. Die Rückstellung durch eine externe Energiequelle stellt ein zusätzliches Sicherheitsmoment bereit, um z.B. zu verhindern, dass die Feststellbremse durch spielende Kinder im Fahrzeug versehentlich gelöst wird.

Die erfindungsgemäße Feststellbremsvorrichtung 1 wird besonders bevorzugt in Kombination mit einer normalen Betriebsbremse eines Fahrzeugs verwendet. Dabei ist bei einer normalen Betriebsbremsung der Federkolben 5 durch den Verriegelungskolben 2 in seiner Grundposition (Figur 2) gehalten.

Somit kann erfindungsgemäß eine Feststellbremsenfunktion über das Federelement 6 realisiert werden. Dadurch kann eine Betätigung der Feststellbremse des Fahrzeugs lediglich mittels Federkraft F realisiert werden. Somit ergibt sich erfindungsgemäß ein einfacher und robuster Aufbau, welcher eine hohe Betriebssicherheit für die Feststellbremse garantieren kann. Weiterhin kann eine kostengünstige Herstellbarkeit realisiert werden. Im Vergleich mit den bekannten Betätigungseinheiten, wie z.B. Seilzug, Elektromotor, hydraulische automatische Parkbremse usw., können deutliche Kostenvorteile verwirklicht werden, insbesondere, wenn ein schon vorhandenes Bremssystem für einen Aufbau eines Gegendrucks P gegen den Federkolben 5 verwendet wird.

## Patentansprüche

1. Feststell-Bremsvorrichtung, umfassend eine Betätigungseinheit (2), eine Übertragungseinheit (3) zur Übertragung einer Betätigungskraft (F) auf eine Bremseinrichtung, wobei ein Federelement (6) die Betätigungskraft (F) zum Feststehen der Bremseinrichtung aufbringt und ein Verriegelungselement, um einen Federkolben (5) und/oder ein Federelement (6) zu verriegeln, wobei das Verriegelungselement mittels eines elektrischen oder elektromagnetischen Aktuators (9) zwischen einer ersten Position, in welcher der Federkolben (5) verriegelt ist, und einer zweiten Position, in welcher der Federkolben (5) freigegeben ist, verstellbar ist.

2. Feststell-Bremsvorrichtung nach Anspruch 1, **dadurch gekennzeichnet, dass** der Federkolben (5) zwischen dem Federelement (6) und der Übertragungseinheit (3) angeordnet ist, wobei die Federkraft (F) des Federelements (6) über den Federkolben (5) auf die Übertragungseinheit (3) wirkt.

3. Feststell-Bremsvorrichtung nach Anspruch 1 oder 2, **dadurch gekennzeichnet, dass** das Verriegelungselement einen Verriegelungskolben (8) und ein Eingriffselement (12) umfasst, wobei der Verriegelungskolben (8) das Eingriffselement (12) in Eingriff mit dem Federkolben (5) bringt.

4. Feststell-Bremsvorrichtung nach Anspruch 3, **dadurch gekennzeichnet, dass** eine Betätigungsrichtung des Verriegelungskolbens (8) gleich einer Betätigungsrichtung des Federkolbens (5) ist.

5. Feststell-Bremsvorrichtung nach Anspruch 3 oder 4, **dadurch gekennzeichnet, dass** der Verriegelungskolben (8) einen sich verjüngenden Bereich (8c) aufweist, um das Eingriffselement (12) mit dem Federkolben (5) in Eingriff zu bringen.

6. Feststell-Bremsvorrichtung nach Anspruch 5, **dadurch gekennzeichnet, dass** der sich verjüngende Bereich (8c) an einer Ausnehmung (8a) des Verriegelungskolbens (8) angeordnet ist.

7. Feststell-Bremsvorrichtung nach einem der Ansprüche 3 bis 6, **dadurch gekennzeichnet, dass** im Inneren des Federkolbens (5) ein Hohlzylinder (5b) ausgebildet ist, welcher eine Ausnehmung (5c) zur zumindest teilweisen Aufnahme des Eingriffselements (12) aufweist.

8. Feststell-Bremsvorrichtung nach Anspruch 7, **dadurch gekennzeichnet, dass** die Ausnehmung (5c) des Federkolbens (5) einen sich verjüngenden Bereich (5d) aufweist, um das Eingriffselement (12) vom Federkolben (5) außer Eingriff zu bringen.

9. Feststell-Bremsvorrichtung nach Anspruch 7 oder 8, **dadurch gekennzeichnet, dass** die Ausnehmung (5c) des Federkolbens (5) und/oder die Ausnehmung (8a) des Verriegelungskolbens (8) im Wesentlichen ringförmig ausgebildet sind.

10. Feststell-Bremsvorrichtung nach einem der Ansprüche 3 bis 9, **dadurch gekennzeichnet, dass** das Eingriffselement (12) eine Vielzahl von Kugeln und/oder Walzen umfasst.

11. Feststell-Bremsvorrichtung nach einem der vorhergehenden Ansprüche, **dadurch gekennzeichnet, dass** eine Rückstellung des Federkolbens (5) in seine Ausgangsposition mittels pneumatischer oder hydraulischer Kraft (P) erfolgt.

12. Feststell-Bremsvorrichtung nach Anspruch 11, **dadurch gekennzeichnet, dass** die Kraft zur Rückstellung des Federkolbens (5) mittels eines ESP-Systems oder eines ABS-Systems bereitgestellt wird.

13. Fahrzeug, umfassend eine Feststell-Bremsvorrichtung gemäß einem der vorhergehenden Ansprüche.

## Claims

1. Parking brake device, comprising an actuating unit (2), a transmission unit (3) for transmitting an actuating force (F) to a braking arrangement, a spring element (6) applying the actuating force (F) for parking the braking arrangement, and a locking element in order to lock a spring piston (5) and/or a spring element (6), the locking element being adjustable by means of an electric or electromagnetic actuator (9) between a first position, in which the spring piston (5) is locked, and a second position, in which the spring piston (5) is released.

2. Parking brake device according to Claim 1, **characterized in that** the spring piston (5) is arranged between the spring element (6) and the transmission unit (3), the spring force (F) of the spring element (6) acting upon the transmission unit (3) via the spring piston (5).

3. Parking brake device according to Claim 1 or 2, **characterized in that** the locking element comprises a locking piston (8) and an engagement element (12), the locking piston (8) bringing the engagement element (12) into engagement with the spring piston (5).

4. Parking brake device according to Claim 3, **characterized in that** an actuating direction of the locking piston (8) is identical to an actuating direction of the spring piston (5).

5. Parking brake device according to Claim 3 or 4, **characterized in that** the locking piston (8) has a tapering region (8c) in order to bring the engagement element (12) into engagement with the spring piston (5).

6. Parking brake device according to Claim 5, **characterized in that** the tapering region (8c) is arranged on a recess (8a) of the locking piston (8).

7. Parking brake device according to one of Claims 3 to 6, **characterized in that**, inside the spring piston (5), a hollow cylinder (5b) is formed, which has a recess (5c) for the at least partial reception of the engagement element (12).

8. Parking brake device according to Claim 7, **characterized in that** the recess (5c) of the spring piston (5) has a tapering region (5d) in order to bring the engagement element (12) out of engagement with the spring piston (5).

9. Parking brake device according to Claim 7 or 8, **characterized in that** the recess (5c) of the spring piston (5) and/or of the recess (8a) of the locking piston (8) are/is of essentially annular design.

10. Parking brake device according to one of Claims 3 to 9, **characterized in that** the engagement element (12) comprises a multiplicity of balls and/or rollers.

11. Parking brake device according to one of the preceding claims, **characterized in that** a return of the spring piston (5) into its initial position takes place by means of pneumatic or hydraulic force (P).

12. Parking brake device according to Claim 11, **characterized in that** the force for returning the spring piston (5) is provided by means of an ESP system or ABS system.

13. Vehicle, comprising a parking brake device according to one of the preceding claims.

## Revendications

1. Dispositif de frein de stationnement, comprenant une unité d'actionnement (2), une unité de transmission (3) pour transmettre une force d'actionnement (F) à un dispositif de freinage, un élément de frein (6) appliquant la force d'actionnement (F) pour serrer le dispositif de frein et un élément de verrouillage, pour verrouiller un piston à ressort (5) et/ou un élément de ressort (6), l'élément de verrouillage pouvant être déplacé au moyen d'un actionneur électrique ou électromagnétique (9) entre une première position, dans laquelle le piston à ressort (5) est verrouillé, et une deuxième position, dans laquelle le piston à ressort (5) est libéré.

2. Dispositif de frein de stationnement selon la revendication 1, **caractérisé en ce que** le piston à ressort (5) est disposé entre l'élément de ressort (6) et l'unité de transmission (3), la force de ressort (F) de l'élément de ressort (6) agissant par le biais du piston à ressort (5) sur l'unité de transmission (3).

3. Dispositif de frein de stationnement selon la revendication 1 ou 2, **caractérisé en ce que** l'élément de verrouillage comprend un piston de verrouillage (8) et un élément d'engagement (12), le piston de verrouillage (8) amenant l'élément d'engagement (12) en prise avec le piston à ressort (5).

4. Dispositif de frein de stationnement selon la revendication 3, **caractérisé en ce qu'**une direction d'actionnement du piston de verrouillage (8) est égale à une direction d'actionnement du piston à ressort (5).

5. Dispositif de frein de stationnement selon la revendication 3 ou 4, **caractérisé en ce que** le piston de verrouillage (8) présente une région (8c) qui se rétrécit, afin d'amener l'élément d'engagement (12) en prise avec le piston à ressort (5).

6. Dispositif de frein de stationnement selon la revendication 5, **caractérisé en ce que** la région (8c) qui se rétrécit est disposée au niveau d'un évidement (8a) du piston de verrouillage (8).

7. Dispositif de frein de stationnement selon l'une quelconque des revendications 3 à 6, **caractérisé en ce qu'**à l'intérieur du piston à ressort (6) est réalisé un cylindre creux (5b), qui présente un évidement (5c) pour recevoir au moins en partie l'élément d'engagement (12).

8. Dispositif de frein de stationnement selon la revendication 7, **caractérisé en ce que** l'évidement (5c) du piston à ressort (5) présente une région (5d) qui se rétrécit, afin d'amener l'élément d'engagement (12) hors d'engagement avec le piston à ressort (5).

9. Dispositif de frein de stationnement selon la revendication 7 ou 8, **caractérisé en ce que** l'évidement (5c) du piston à ressort (5) et/ou l'évidement (8a) du piston de verrouillage (8) sont réalisés essentiellement sous forme annulaire.

10. Dispositif de frein de stationnement selon l'une quelconque des revendications 3 à 9, **caractérisé en ce que** l'élément d'engagement (12) présente une pluralité de billes et/ou de rouleaux.

11. Dispositif de frein de stationnement selon l'une quelconque des revendications précédentes, **caractérisé en ce qu'**un rappel du piston à ressort (5) dans sa position de départ a lieu au moyen d'une force pneumatique ou hydraulique (P).

12. Dispositif de frein de stationnement selon la revendication 11, **caractérisé en ce que** la force pour le rappel du piston à ressort (5) est fournie au moyen d'un système ESP ou d'un système ABS.

13. Véhicule comprenant un dispositif de frein de stationnement selon l'une quelconque des revendications précédentes.
